# FASCICULE DE BREVET EUROPEEN

(11) **EP 0 333 552 B1**
(45) Date de publication et mention de la délivrance du brevet: **28.04.1993**
(21) Numéro de dépôt: 89400610.5
(22) Date de dépôt: 03.03.1989
(51) Int. Cl.: G03B 42/06, G10K 11/34, G01S 15/00

(54) **Sonde, dispositif d'imagerie utilisant une telle sonde et procédé mettant en oeuvre un tel dispositif**
Sonde, Vorrichtung zur Bilderstellung mit dieser Sonde und Verfahren zur Benutzung dieser Vorrichtung
Sonde, device for image formation with such a sonde and method for using the device

(30) Priorité: 11.03.1988 FR 8803185
(43) Date de publication de la demande: 20.09.1989
(73) Titulaire: GENERAL ELECTRIC CGR S.A., F-92130 Issy les Moulineaux (FR)
(72) Inventeur: Bele, Robert, F-75116 Paris (FR); Bertrand, Patrick, F-75116 Paris (FR); Ramond, Jean-Pierre, F-75116 Paris (FR)
(74) Mandataire: Ballot, Paul Denis Jacques

(56) Documents cités:
- EP-A- 0 072 287
- EP-A- 0 177 407
- DE-A- 2 645 738
- DE-A- 3 339 838
- DE-A- 3 512 519
- US-A- 4 253 168
- US-A- 4 462 092
- US-A- 4 576 045

## Description

L'invention a principalement pour objet une sonde d'échographie ultrasonore, un dispositif d'imagerie utilisant une telle sonde et un procédé mettant en oeuvre un tel dispositif.

On connaît, divers types de sondes d'échographie ultrasonore. D'une part, on connaît les sondes à balayage sectoriel, c'est-à-dire comportant soit un équipage mobile oscillant soit plusieurs transducteurs électro-acoustiques montés sur une roue et commutés à leur passage devant une fenêtre d'émission. Les qualités de ces sondes sont leur rapidité d'acquisition et leur simplicité de principe qui se traduit par des moyens de traitement de signal relativement simples et peu coûteux. La surface de couplage des ondes acoustiques est relativement faible ce qui permet de disposer la sonde entre deux côtes du patient pour les observations cardiaques. En revanche, la durée de vie de ces sondes est limitée.

On connaît d'autre part, des sondes comportant une pluralité de transducteurs électro-acoustiques. Parmi ceux-ci on utilise notamment le dispositif à balayage linéaire comportant une barrette linéaire comprenant, par exemple 64 transducteurs électro-acoustiques élémentaires. Le balayage s'effectue en déplaçant pour chaque tir, c'est-à-dire émission d'ondes ultrasonores, le groupe des transducteurs actifs. Ce type de barrette linéaire présente une faible résolution dûe au faible nombre de transducteurs utilisés simultanément.

Pour les barrettes linéaires quand le faisceau est focalisé par balayage électronique en utilisant des retards destinés à compenser les différences de trajet, l'angle de balayage est limité. De plus, cette solution est difficilement réalisable et coûteuse car on a besoin d'éléments induisant des retards importants, tout en gardant la cohérence du signal.

Une ébauche de solution à ces problèmes a été donnée par les barrettes convexes c'est-à-dire des barrettes pour lesquelles le transducteur a été disposé sur une courbe la surface rayonnante d'une telle barrette est convexe. Une telle barrette est décrite notamment dans le Brevet Européen n° 69 677. Toutefois, la résolution d'une telle barrette n'est encore pas suffisante.

Une autre tentative de solution est décrite dans le document US-A- 457 6045. Il décrit une barette courbe. Tous les transducteurs d'une telle barrette ne peuvent cependant pas insonifier tous les azimuts.

Une originalité importante de la présente invention réside dans le fait d'utiliser tous les transducteurs susceptibles d'insonifier une direction pour former une image correspondant à cette région. La focalisation est obtenue par balayage électronique utilisant des éléments de retard. Les retards à réaliser sont moins importants que dans le cas d'une barrette linéaire du fait même de la géométrie de la barrette courbe. De plus, l'angle de balayage est bien supérieur passant, par exemple, de 90° à 150°.

Il est possible que pour la réalisation d'une image on utilise plus des transducteurs pour le centre que pour les bords. Il en résulte que l'image aura une meilleure résolution au centre que sur le bord. Cela n'est pas très gênant car, en imagerie médicale, on centre l'image sur le point d'intérêt, les bords servant principalement à situer l'élément intéressant par rapport aux autres organes. Ainsi un très large champ de vision procure un grand confort au médecin chargé du diagnostic, une très haute résolution au centre permettant de faire un diagnostic fin.

L'invention a pour objet un dispositif tel que décrit dans les revendications.

L'invention sera mieux comprise au moyen de la description ci-après et des figures annexées données comme des exemples non limitatifs parmi lesquels :
- la figure 1 est un schéma d'un premier exemple de réalisation de sondes selon la présente invention ;
- la figure 2 est un schéma explicatif du principe de fonctionnement de la sonde selon la présente invention ;
- la figure 3 est un schéma d'un deuxième exemple de réalisation d'une sonde selon la présente invention ;
- la figure 4 est un schéma explicatif de fonctionnement de sondes selon la présente invention ;
- la figure 5 est un schéma explicatif du fonctionnement des sondes selon la présente invention ;
- la figure 6 est un schéma d'un premier exemple de réalisation du dispositif d'imagerie selon la présente invention ;
- la figure 7 est un schéma d'un deuxième exemple de réalisation d'un dispositif d'imagerie selon la présente invention;
- la figure 8 est un schéma d'un troisième exemple de réalisation d'un dispositif d'imagerie selon la présente invention.

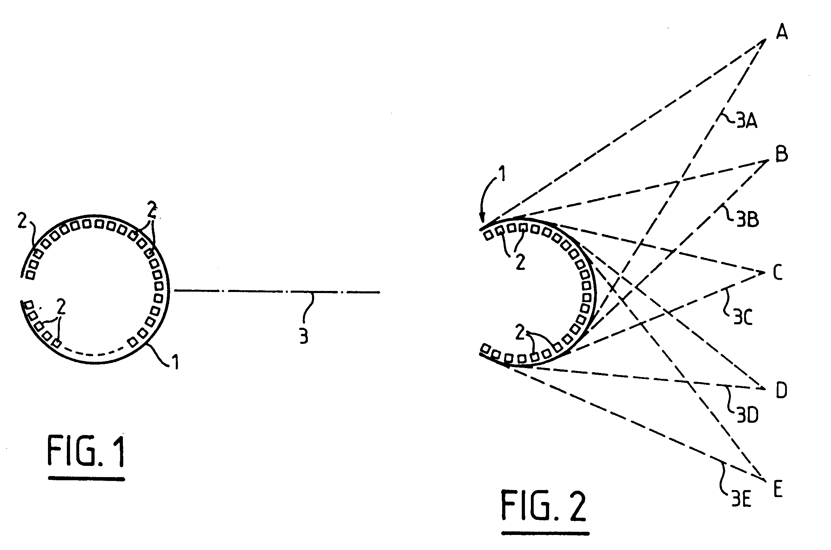

Sur les figures 1 à 3, on a utilisé les mêmes références pour désigner les mêmes éléments.

Sur la figure 1, on peut voir une sonde d'échographie 1 comportant une pluralité de transducteurs électro-acoustiques 2, avantageusement régulièrement répartis. Dans l'exemple illustré sur la figure 1, la sonde a une forme en arc de cercle. Il est bien entendu que d'autres formes, comme par exemple une hyperbole, un arc d'élipse ou une parabole ne sortent pas du cadre de la présente invention.

La sonde 1 comporte un axe de symétrie 3. Lors de réalisations d'images il sera avantageux de placer le point d'intérêt sur l'axe 3. La sonde 1 est capable de réaliser des images dans un secteur centré sur l'axe 3. Le balayage sectoriel sera obtenu en appliquant des retards variables aux transducteurs 2.

Dans l'exemple illustré sur la figure 1, la sonde 1 ne comporte pas de transducteurs à l'opposé de l'axe 3. En effet, de tels transducteurs ne pourraîent jamais participer à une image d'un secteur centré sur l'axe 3. Les transducteurs électro-acoustiques sont avantageusement des transducteurs piézo-électriques.

Sur la figure 2, on peut voir un schéma explicatif de la formation d'image d'un secteur limité par le point A et E. La sonde 1 comporte une pluralité de transducteurs électro-acoustiques 2 disposés régulièrement sur un cercle dans l'exemple de réalisation illustré par la figure 2. Dans la méthode proposée par la présente invention, on insonifie un point en focalisant l'énergie ultrasonore par un balayage électronique, c'est-à-dire que on applique des retards aux signaux générés par les transducteurs 2 de façon à compenser les différences de marche. Or, d'une part, les transducteurs électro-acoustiques 2 ont une directivité propre, et d'autre part, la géométrie de la sonde 1 ne permet pas à tous les transducteurs électro-acoustiques 2 d'éclairer tous les points de l'objet à observer. Dans le dispositif selon la présente invention on utilise uniquement les transducteurs électro-acoustiques 2 pouvant insonifier un point pour en obtenir une image. Ce principe est valable aussi bien pour un balayage électronique à deux dimensions pour lequel chaque émission correspondra à une ligne de l'image que pour un balayage électronique à trois dimensions pour lequel chaque émission correspondra à un point de l'image.

Ainsi pour chacun des points A,B,C,D et E on met en oeuvre tous les transducteurs électro-acoustiques 2 dont l'orientation et la directivité permettent d'insonifier ces points.

Sur la figure 2, on a illustré par des secteurs 3a,3b,3c,3d et 3e des transducteurs susceptibles d'insonifier le point ou les lignes passant par les points respectivement A,B,C,D et E.

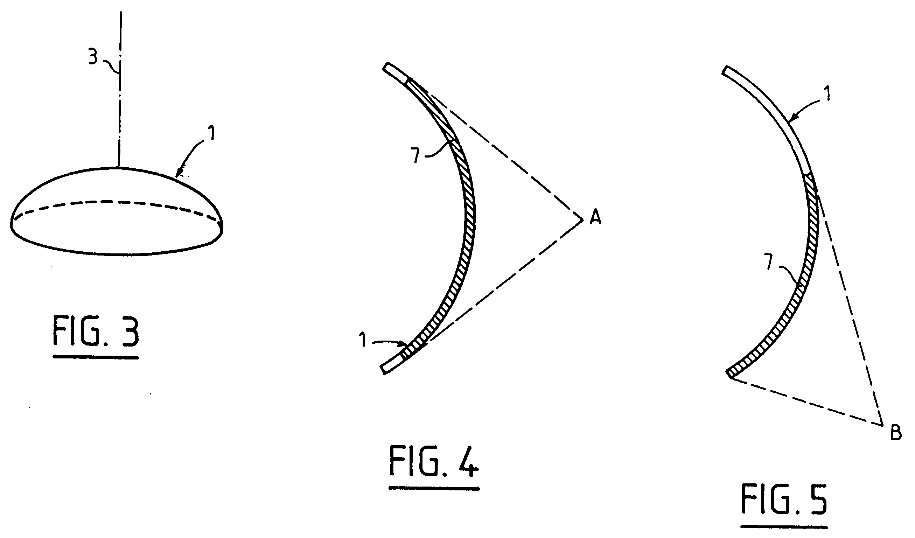

Sur la figure 3, on peut voir une calotte sphérique susceptible de servir de support à une sonde 1. La répartition des transducteurs électro-acoustiques 2 non représentés sur la figure 3, sur une calotte sphérique permet une focalisation tridimensionnelle du faisceau d'énergie acoustique. On peut diriger les faisceaux, soit en effectuant un balayage électronique tridimensionnel, soit en regroupant les transducteurs en anneaux et en associant à ces anneaux des moyens d'adressages correspondants aux divers régions de l'espace à exploiter. Cette dernière méthode a été décrite dans le Brevet n° 83 016550 déposé le 18 Octobre 1983 par la Société CGR ULTRASONIC.

Sur les figures 4 et 5, on peut voir l'influence de l'incidence sur laquelle est formée une ligne de l'image sur la résolution de cette partie de l'image.

Sur la figure 4, on peut voir le principe de la formation de l'image d'une ligne passant par un point A situé près de l'axe de la sonde 1. Tous les transducteurs électro-acoustiques appartenant à la zone 7 hachurée participent à la formation de la ligne de l'image passant par le point A (non représentés sur la figure 4). Tous les transducteurs électro-acoustiques appartenant à la zone 7 sont susceptibles d'insonifier le point A. La ligne passant par le point A constituera à la visualisation une ligne du centre de l'image. La formation de cette ligne a participé à une zone 7 comportant un maximum de transducteurs électro-acoustiques. Ainsi, la résolution du centre de l'image, où sera placé le centre d'intérêt, par exemple pour le médecin, aura une très grande résolution.

Sur la figure 5, on peut voir le principe de formation de l'image d'une ligne passant par un point B situé loin de l'axe de la sonde 1. Dans ce cas, la zone 7 des transducteurs électro-acoustiques, non illustrée sur la figure, susceptible d'insonifier le point B est moins important que dans le cas de la figure 4. Au fur et à mesure qu'on s'approche du bord de l'image, la zone 7 se réduit, et avec elle la résolution de l'image. Sur le bord de l'image on obtient une résolution réduite correspondant à la résolution des systèmes de l'art antérieur.

Par contre, l'utilisation d'un balayage électronique associé à une barrette courbe permet d'obtenir un angle de prise de vue supérieur passant par exemple de 90° dans les dispositifs de type connu à 150°.

Ainsi, en imagerie médicale on obtient une image dont le centre présente une très haute résolution et présentant un angle important de prise de vue. En imagerie médicale, les bords servent principalement à situer les organes les uns par rapport aux autres, donc à se repérer ne nécessitent pas une très grande résolution. Par contre, on place au centre de l'image l'organe à examiner nécessitant une résolution maximale. Fréquemment le médecin utilisant le dispositif selon la présente invention ne s'apercevra même pas de la baisse de résolution sur le bord.

Il est bien entendu possible de prolonger la sonde 1 par exemple pour former un cercle presque complet, comme illustré sur la figure 1, sans sortir du cadre de la présente invention. Dans ce cas, la résolution sera la même au centre et au bord de l'image au prix d'une augmentation du nombre de transducteurs nécessaires à la mise en oeuvre d'une sonde. De plus, cela permet d'augmenter l'angle de prise de vue.

Par contre, pour un nombre d'éléments transducteurs donné, par exemple 128 ou 256, une courbure limitée permet d'augmenter la résolution au centre.

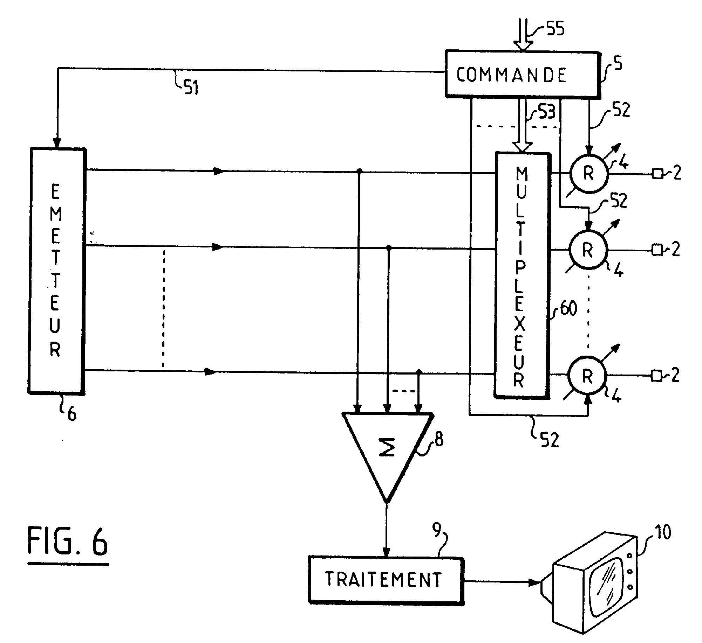

Sur la figure 6, on peut voir un premier exemple de réalisation d'un dispositif d'échographie selon la présente invention. Le dispositif comporte une pluralité de transducteurs électro-acoustiques 2. Pour simplifier la figure, les transducteurs électro-acoustiques 2 sont représentés alignés. Il est bien entendu que toute géométrie désirée, comme par exemple une surface rayonnante convexe peut être adoptée pour réaliser le dispositif selon la présente invention. Les transducteurs électro-acoustiques 2 reçoivent de l'énergie électrique à travers un dispositif de multiplexage 60 et un dispositif de retard variable 4. Les transducteurs électro-acoustiques 2 sont connectés à travers des dispositifs de retard 4 et des multiplexeurs 60 et un récepteur 8. Le récepteur 8 est connecté à un dispositif de traitement du signal 9. Le dispositif de traitement de signal 9 est connecté à un dispositif d'exploitation 10 comme par exemple un dispositif de visualisation comportant, par exemple, un tube à rayons cathodiques, une mémoire d'image, un dispositif de stockage d'images ou un dispositif de traitement d'images. Un dispositif de commande 5 est connecté au dispositif de retard 4 par des liaisons 52 au multiplexeur 60 par un bus 53 à l'émetteur 6 par une commande 51.

Le dispositif de commande 5 détermine pour chaque ligne de l'image, le transducteur électro-acoustique 2 à mettre en oeuvre, commande le réglage du multiplexeur 60 pour permettre cette mise en oeuvre et le réglage d'un dispositif de retard 4 pour obtenir la focalisation voulue. Seuls les transducteurs devant participer à une émission sont alimentés par l'émetteur 6 par l'intermédiaire du multiplexeur 60.

A la réception, au moins les transducteurs 2 ayant participé à l'émission sont connectés par l'intermédiaire du multiplexeur 60 au récepteur 8.

Le dispositif de commande 5 assure par l'intermédiaire de la ligne 51 la synchronisation entre l'émission et la réception. En effet, il est important que l'émetteur 6 n'émette pas durant la réception pour que le signal de l'émetteur 6 ne perturbe pas le fonctionnement du récepteur 8. En effet, si on ne prend pas de précautions le signal de l'émetteur 6 risque de saturer le récepteur 8.

Le multiplexeur 60 comporte par exemple un assemblage en cascade de multiplexeurs analogiques comme par exemple le multiplexeur analogique commercialisé sous la référence DG 507 par la Société SILICONIX.

Il est bien entendu que l'utilisation d'un multiplexeur numérique ne sort pas du cadre de la présente invention.

Les éléments de retard 4 sont par exemple des lignes à retard, le retard est sélectionné par la commutation d'un chemin de données du signal dans les lignes à retard.

Le dispositif de traitement du signal 9 comporte par exemple des processeurs de signal, des filtres, des multiplieurs, des additionneurs et/ou des calculateurs de transformée de Fourier rapides.

Le dispositif de commande 5 assure le bon fonctionnement du dispositif selon la présente invention. Il effectue l'adressage, la synchronisation des émissions et des réceptions. Divers types de dispositifs de commande 5 peuvent être utilisés. Par exemple, on utilise un dispositif de commande 5 comportant un séquenceur comprenant des compteurs qui adressent une mémoire où sont stockées les adresses à mettre en oeuvre. Avantageusement, le dispositif de commande 5 comporte au moins une unité arithmétique et logique, par exemple contenue dans un microprocesseur, une mémoire morte contenant le programme et une mémoire vide de travail.

Avantageusement, l'unité de commande 5 reçoit des ordres de commande de l'utilisateur par un bus de commande 55.

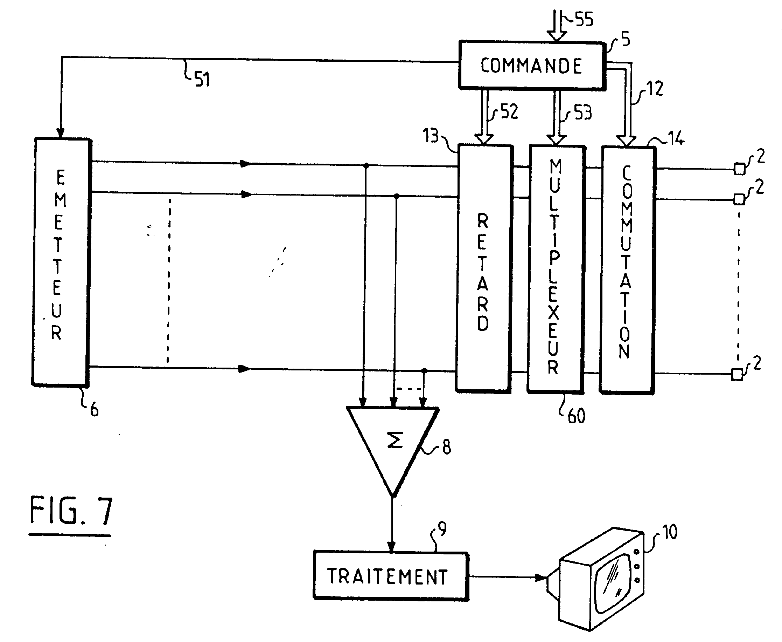

Sur la figure 7, on peut voir un deuxième exemple de réalisation du dispositif selon la présente invention. Dans l'exemple de réalisation de la figure 7, l'émetteur 6 et le récepteur 8 sont reliés au transducteur électro-acoustique 2 par l'intermédiaire d'un dispositif de retard 13 du multiplexeur 60 à un dispositif de commutation 14 connecté en série. L'unité de commande 5 est reliée par un bus 52 au dispositif de retard 13 par un bus 53 au multiplexeur 60 et par un bus 12 au dispositif de commutation 14. D'autre part l'unité de commande 5 est relié l'émetteur 6.

Le dispositif de retard 13 comprend des lignes à retard susceptibles d'être mises en série et/ou en parallèle. Ainsi, le dispositif de retard 13 permet d'obtenir simultanément les diverses valeurs de retard nécessaires au fonctionnement de la sonde. Le dispositif de commutation 14 associé au multiplexeur 60 permet de connecter les bons éléments de retard au bon transducteur électro-acoustique 2. Le dispositif tel qu'illustré sur la figure 7 présente l'avantage de diminuer les nombres de lignes à retard nécessaires au bon fonctionnement du dispositif.

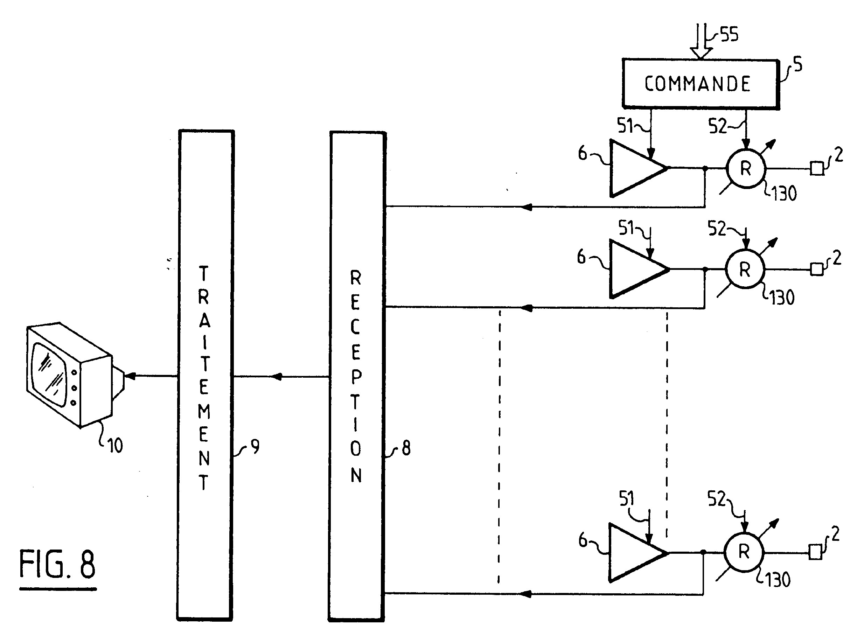

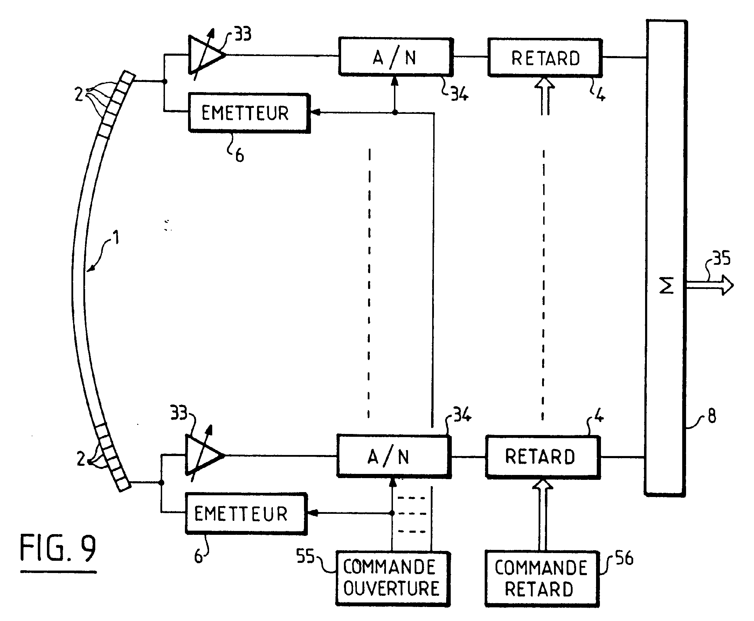

Sur la figure 8, on peut voir un troisième exemple de réalisation du dispositif selon la présente invention. Dans l'exemple illustré sur la figure 8, à chaque transducteur électro-acoustique 2 est associé un émetteur 6 et un élément de retard 130. Le dispositif de commande 5 est relié par des lignes de commande 51 aux émetteurs 6 et par des lignes de commande 52 aux éléments de retard 130.

Les transducteurs électro-acoustiques 2 sont reliés par l'intermédiaire des éléments de retard 130 à un récepteur 8. Le récepteur 8 est relié à un dispositif de traitement du signal 9. Le dispositif de traitement du signal 9 est relié à un dispositif d'exploitation 10 comme par exemple un dispositif d'affichage.

L'invention s'applique à l'imagerie utilisant des ondes acoustiques, comme par exemple les ondes ultrasonores. L'invention s'applique notamment au contrôle non destructif à l'obtention d'images à l'intérieur de liquides, comme par exemple les images sous-marines.

L'invention s'applique principalement à l'imagerie médicale ultrasonore.

## Revendications

1. Dispositif d'échographie comprenant une pluralité de transducteurs piézo-électriques (2) situés sur une surface convexe, des éléments de retard (4) susceptibles d'induire un retard dans les signaux associés aux transducteurs piézo-électriques (2), et des moyens (60) de commutation permettant de rendre actif un nombre optimisé de transducteurs (2) en fonction d'une direction de tir de façon à insonifier au mieux cette direction de tir, d'une direction de tir à une direction adjacente de tir les transducteurs utilisés comportant toujours un lot de transducteurs commun utilisés pour ces deux directions, caractérisé en ce que ce nombre optimisé est plus grand pour une direction centrale de tir que pour des directions latérales de tir.

2. Dispositif d'échographie selon la revendication 1, caractérisé par le fait que les transducteurs piézo-électriques (2) sont situés sur un arc de cercle convexe.

3. Dispositif selon la revendication 1, caractérisé par le fait que les transducteurs piézo-électriques (2) sont situés sur une partie d'une surface sphérique.

4. Dispositif selon la revendication 3, caractérisé par le fait qu'il comporte un dispositif automatique de commande (5) susceptible de déterminer les transducteurs piézo-électriques (2) à mettre en oeuvre pour émettre et/ou recevoir une onde acoustique pour chaque azimut, déterminer les valeurs des retards à appliquer aux transducteurs (2) actifs et/ou effectuer la synchronisation émission/réception.

## Patentansprüche

1. Echographieeinrichtung, mit mehreren piezoelektrischen Ultraschallwandlern (2), die sich auf einer konvexen Fläche befinden, mit Verzögerungselementen (4), die dazu geeignet sind, den den piezoelektrischen Ultraschallwandlern (2) zugehörigen Signalen eine Verzögerung zu verleihen, und Mitteln (60) zum Umschalten von einer Senderichtung zu einer benachbarten Senderichtung, mit denen in Abhängigkeit von einer Senderichtung eine optimierte Anzahl von Ultraschallwandlern (2) aktiviert werden kann, derart, daß diese Senderichtung am besten beschallt wird, wobei die verwendeten Ultraschallwandler stets eine für diese zwei Richtungen gemeinsam genutzte Ultraschallwandler-Gruppe umfassen, dadurch gekennzeichnet, daß diese optimierte Anzahl bei einer zentralen Senderichtung größer als bei seitlichen Senderichtungen ist.

2. Echographieeinrichtung gemäß Anspruch 1, dadurch gekennzeichnet, daß sich die piezoelektrischen Ultraschallwandler (2) auf einem konvexen Kreisbogen befinden.

3. Einrichtung gemäß Anspruch 1, dadurch gekennzeichnet, daß sich die piezoelektrischen Ultraschallwandler (2) auf einem Teil einer sphärischen Fläche befinden.

4. Einrichtung gemäß Anspruch 3, dadurch gekennzeichnet, daß sie eine automatische Steuereinrichtung (5) umfaßt, die dazu geeignet ist, diejenigen piezoelektrischen Ultraschallwandler (2) zu bestimmen, die in Betrieb gesetzt werden müssen, um für jeden Azimutwinkel eine Schallwelle zu senden und/oder zu empfangen, die auf die aktiven Ultraschallwandler (2) anzuwendenden Verzögerungswerte zu bestimmen und/oder die Sende-/Empfangssynchronisation auszuführen.

## Claims

1. Echographic device comprising a plurality of piezoelectric transductors (2) situated on a convex surface, retardation elements (4) capable of inducing a delay in the signals associated with the piezo-electric transductors (2) and means (60) of commutation making it possible to render active an optimalized number of transductors (2) as a function of a direction of firing in' such a manner as to acoustically excite as well as possible within this direction of firing, from a direction of firing to an adjacent direction of firing, the transductors used comprising in every case a common group of transductors for these two directions, characterized by the fact that the said optimalized number is greater for a central direction of firing than for lateral directions of firing.

2. Echographic device in accordance with claim 1, characterized by the fact that the piezo-electric transductors (2) are situated on a convex arc of a circle.

3. Device in accordance with claim 1, characterized by the fact that the piezo-electric transductors (2) are situated on a part of a spherical surface.

4. Device in accordance with claim 3, characterized by the fact that it comprises an automatic control device (5) capable of determining the piezo-electric transductors (2) to be put into operation to emit and/or receive a sound wave for each azimuth, determining the values of the retardations to be applied to the active transductors (2) and/or effecting the emission/reception synchronization.
